(19) Europäisches Patentamt

European Patent Office

Office européen des brevets

(11) Veröffentlichungsnummer: **0 318 633 B1**

(12) **EUROPÄISCHE PATENTSCHRIFT**

(45) Veröffentlichungstag der Patentschrift: **30.12.92**

(21) Anmeldenummer: **88106176.6**

(22) Anmeldetag: **19.04.88**

(51) Int. Cl.⁵: **B65F 1/00**, B65F 1/16, B62B 1/26

(54) **Entsorgungsbehälter.**

(30) Priorität: **30.11.87 DE 8715839 U**

(43) Veröffentlichungstag der Anmeldung:
**07.06.89 Patentblatt 89/23**

(45) Bekanntmachung des Hinweises auf die
Patenterteilung:
**30.12.92 Patentblatt 92/53**

(84) Benannte Vertragsstaaten:
**AT BE CH DE ES FR GB IT LI NL SE**

(56) Entgegenhaltungen:
**DE-A- 2 425 458      DE-U- 8 711 309**
**FR-A- 2 547 258      GB-A- 501 677**
**GB-A- 1 033 992      US-A- 2 072 813**

(73) Patentinhaber: **FIRMA ALFRED KUEHMICHEL**
**Hasselbacher Weg 13**
**W-6295 Allendorf-Weilburg(DE)**

(72) Erfinder: **Kuehmichel, Manfred**
**Hasselbacher Weg 13**
**W-6295 Allendorf-Weilburg(DE)**

(74) Vertreter: **Blumbach Weser Bergen Kramer**
**Zwirner Hoffmann Patentanwälte**
**Sonnenberger Strasse 100**
**W-6200 Wiesbaden 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Entsorgungsbehälter zur Aufnahme von Abfällen nach dem Oberbegriff des Anspruchs 1 sowie die Verwendung einer Anzahl von solchen Entsorgungsbehältern zur Zwischenlagerung dieser Abfälle.

Ein bekannter Entsorgungsbehälter (GB-A 501 677) besteht aus einem offenen Kübel, der durch einen mehrteiligen Befestigungsring mit angelenktem Deckel geschlossen gehalten werden kann. Der Deckel ist ziemlich flach und liegt auf dem umgebogenen Rand des Kübels auf. Kübel eignen sich zur Zwischenlagerung von Haushaltsmüll, sind aber zur Aufnahme von Altöl und dergl. gefährlichem Abfall weniger geeignet.

Zur Aufnahme von Altöl sind sogenannte Altöl-Sammelbehälter entwickelt worden, die jeweils an ein vorhandenes Altölabsauggerät anschließbar sind. Unter den Altölen gibt es solche, die wieder aufbereitungsfähig sind, beispielsweise Motoröle, Getriebeöle, Turbinenöle, Maschinenöle und Hydrauliköle, dann Altöle, die noch zur Energienutzung brauchbar sind, beispielsweise Metallbearbeitungsöle, Isolieröle auf Mineralölbasis und dergleichen, ferner stark verschmutzte Altöle, die nur als Sonderabfälle entsorgt werden können, beispielsweise Emulsionen, Öl-Wasser-Gemische, Lösungsmittel, chlor- und PCB-verunreinigte Altöle, Ölfilter und andere ölhaltige Betriebsmittel. Es versteht sich, daß die Aufarbeitungsfähigkeit der Altöle auch davon abhängt, daß sie richtig sortiert der Aufbereitungsanlage wieder zugeführt werden. Es besteht deshalb das Bedürfnis, Altöle "vor Ort des Anfalls" in den richtigen Behälter einzusortieren. Ähnliche Bedürfnisse bestehen bei Dosen, Büchsen, Verpakkungen und dergleichen aus Metall, Kunststoff, Glas etc. sowie im Bereich der Chemie.

Der Erfindung liegt deshalb die Aufgabe zugrunde, ein Entsorgungsbehältersystem zu schaffen, mit dem eine äußerst wirtschaftliche Entsorgung von Abfällen, insbesondere Altölen und Chemikalien, möglich wird, wie sie in Fabriken und Werkstätten anfallen. Die gestellte Aufgabe wird aufgrund der Merkmale des Anspruches 1 gelöst.

Der erfindungsgemäße Entsorgungsbehälter zur Aufnahme von Abfällen besteht aus einem Faß bekannter Ausbildung und einer sogenannten Faßkrone. Die Faßkrone ist auf das Faß aufsetzbar und abmontierbar und weist hierzu einen Befestigungsring zum lösbaren Umfassen des oberen Endes des Fasses sowie Scharnierteile zur beweglichen Verbindung mit einem Klappdeckel auf, der auf dem Befestigungsring aufzusetzen ist und mit Verschlußeinrichtungen zum verschließbaren Verbinden mit dem Befestigungsring versehen sein kann.

Entsprechend der Vielfalt der Abfälle wird eine entsprechende Anzahl von Entsorgungsbehältern aufgestellt, die gewissermaßen aus einem konstanten Anteil, der Faßkrone, und einem variablen Anteil, dem Faß, bestehen. Die Faßkrone ist entsprechend dem vorgesehenen Inhalt des Entsorgungsbehälters markiert, um Verwechslungen beim Einfüllen in das Faß zu vermeiden. Wenn das Faß gefüllt ist, wird die Faßkrone abgenommen, und das gefüllte Faß wird zur Wiederverwendungsstelle bzw. Entsorgungsstelle gebracht. Am Ort des Anfalls der Abfälle wird ein neues Faß mit der Faßkrone versehen usw. Dieses System ist äußerst wirtschaftlich, weil Fässer bekannter Ausbildung, wie sogenannte Stahlsickenfässer oder Deckelfässer, verwendet werden können, wie sie zum Antransport von Ölen und dergleichen an Tankstellen anfallen.

Verbesserungen von Einzelheiten der Erfindung sind in den Unteransprüchen abgehandelt und werden anhand der Zeichnung beschrieben. Dabei zeigt:

Fig. 1    eine perspektivische Ansicht einer ersten Ausführungsform eines Entsorgungsbehälters,

Fig. 2    eine Ansicht von rückwärts auf den Entsorgungsbehälter,

Fig. 3    eine Einzelheit, nämlich einen Befestigungsring,

Fig. 4    eine weitere Einzelheit, nämlich einen Einfülltrichter,

Fig. 5    einen zweiten Befestigungsring,

Fig. 6    eine perspektivische Ansicht einer zweiten Ausführungsform eines Entsorgungsbehälters,

Fig. 7    eine vergrößerte Einzelheit in einer Schnittdarstellung,

Fig. 8    ein Spannschloß in vergrößerter Darstellung,

Fig. 9    eine Karre und

Fig. 10   eine Einzelheit im Bereich einer Griffstange, nämlich einen Rastbolzen.

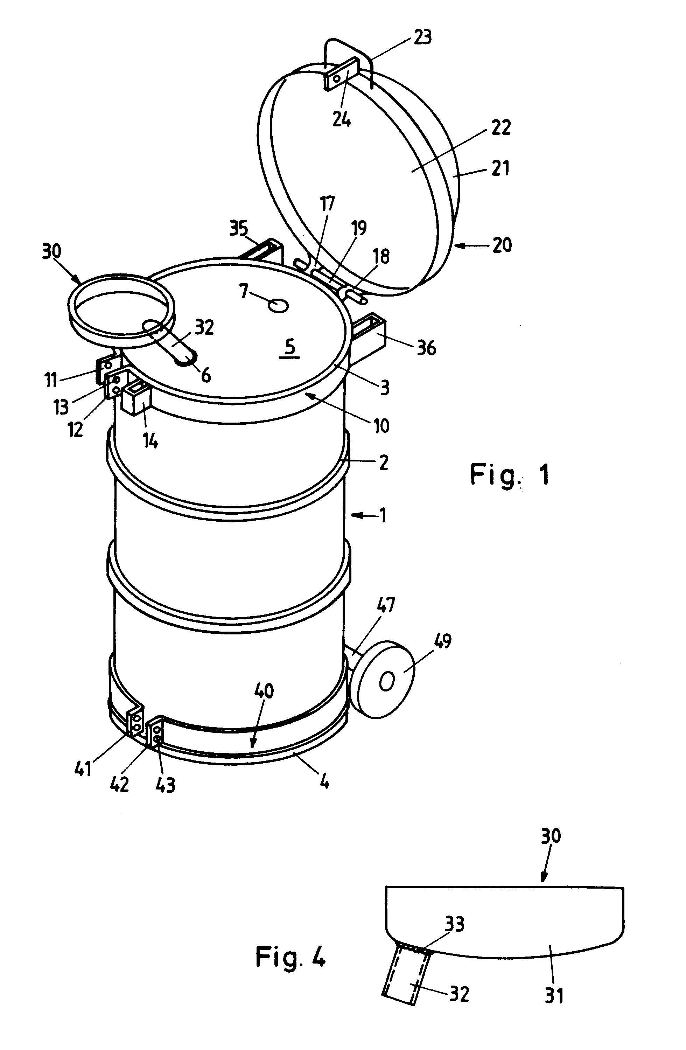

In Fig. 1 ist ein Faß 1 dargestellt, welches mit reifenförmigen Sicken 2 versehen ist und ein oberes Ende 3 sowie ein unteres Ende 4 aufweist. In der oberen Endwand 5 sind eine Einfüllöffnung 6 und eine Belüftungsöffnung 7 vorgesehen, die durch entsprechende Schraubdeckel verschließbar sind. Es ist auch möglich, ein sogenanntes Deckelfaß 1 zu verwenden, bei dem die Endwand 5 insgesamt als Deckel ausgebildet ist. Diese Ausbildung kommt vor allem dann in Betracht, wenn stückiges Abfallgut gesammelt werden soll.

Am oberen Ende 3 des Fasses 1 ist ein erster Befestigungsring 10 angebracht, dar als offene Spange mit jeweils einer Lasche 11, 12 an den Enden ausgebildet ist, so daß der Befestigungsring 10 ausgeweitet werden kann, um vom Faß 1 abgenommen zu werden. Der Befestigungsring 10 kann mittels Schrauben 13 am Faß festgezogen werden, wie dargestellt.

An einer Stelle seines Umfangs trägt der Befestigungsring 10 zwei Scharnierböcke 15, 16, an denen weitere Scharnierböcke 17, 18 anliegen und durch eine durchgesteckte Achse 19 gelenkig miteinander verbunden sind. Die Achse 19 kann auch durch jeweils eine Durcksteckschraube zwischen den Scharnierböcken 15, 17 und 16, 18 ersetzt werden.

Die Scharnierteile 15 bis 19 haltern einen Klappdeckel 20, der einen ringförmigen Aufsetzrand 21 und eine gewölbte Deckwand 22 aufweist und mit einem Griff 23 sowie mit einer eine Durchsteköffnung aufweisenden Verschlußlasche 24 versehen ist. Wenn der Deckel 20 geschlossen wird, greift die Verschlußlasche 24 in eine ösenförmige Verschlußlasche 14 des Befestigungsrings 10 ein und kann beispielsweise mittels eines Vorhängeschlosses gesichert werden, dessen Bügel durch die Durchstecköffnung hindurchgreift.

Zwischen dem Deckel 20 und der Faßwand 5 verbleibt ein Hohlraum, in welchem ein Einfülltrichter 30 untergebracht werden kann. Der Einfülltrichter 30 besteht aus einer Einfüllschale 31 und einem (gegebenenfalls konischen) Einfüllstutzen 32 sowie gegebenenfalls einem Siebeinsatz 33. Der Boden der Einfüllschale 31 ist ellipsoidförmig gewölbt, und in der Nähe des einen Brennpunktes der gedachten Ellipse führt der Einfüllstutzen 32 normal zur örtlichen Tangente weg, d. h. es ist ein Winkel von etwa 20° zwischen der Achse der Schale 31 und der Achse des Einfüllstutzens 32 eingehalten, wie am besten aus Fig. 4 ersichtlich. Infolge dieser Ausbildung des Einfülltrichters 30 ist es möglich, den Einfüllstutzen 32 in der Einfüllöffnung 6 zu belassen, unabhängig davon, ob die Schale 31 zum bequemeren Einfüllen über den Rand des Fasses geschwenkt wird, wie in Fig. 1 dargestellt, oder ob die Schale in den Hohlraum über der Faßwand 5 zurückgeschwenkt wird, um den Deckel 20 zu schließen.

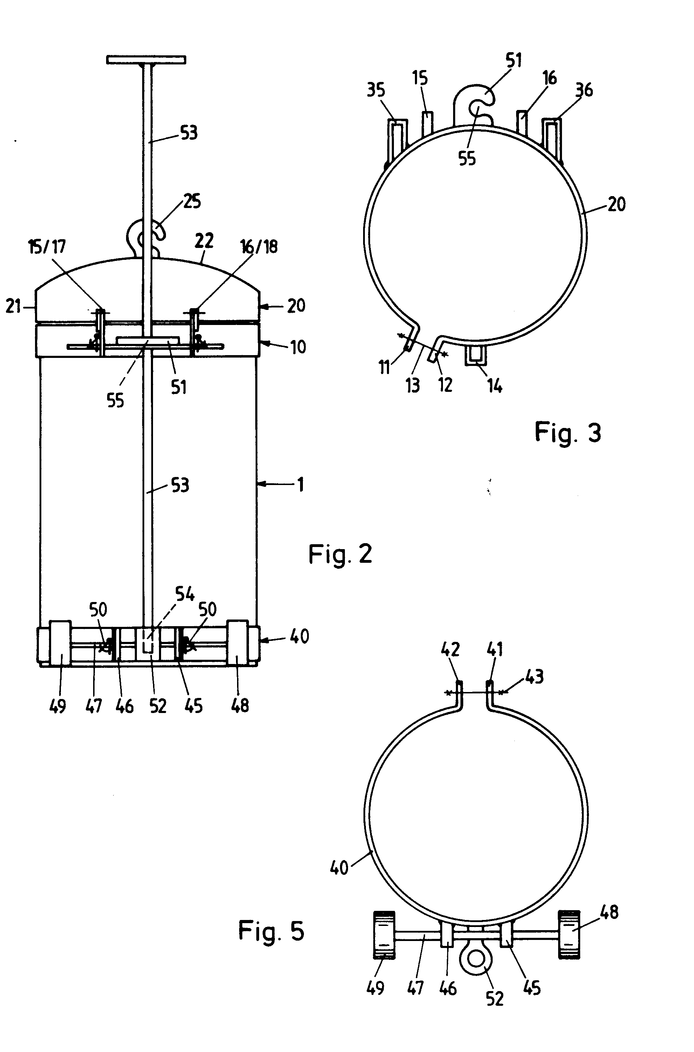

Am unteren Ende 4 des Fasses ist ein zweiter Befestigungsring 40 lösbar angebracht, der ebenfalls spangenförmig ausgebildet und mit Laschen 41, 42 an seinen Enden versehen ist, um den Ring zur Demontage auszuweiten oder zur Montage festzuziehen, letzteres mittels Schrauben 43. Am Befestigungsring 40 sind Lagerböcke 45, 46 (Fig. 5) angebracht, durch welche sich eine Achse 47 erstreckt, an deren Enden Räder oder Rollen 48, 49 angebracht sind. Die Achse 47 wird mit Splinten oder Sägerringen 50 an den Lagerböcken gegen axiales Verrutschen gehalten. Wenigstens eines der Räder 48, 49 ist demontierbar, um die Achse 47 abziehen zu können.

Am Befestigungsring 10 ist ein seitlich offener Haken 51 (Fig. 2, 3) und am Befestigungsring 40 eine becherartige Stütze 52 für eine Behältergriffstange 53 vorgesehen, die mit ihrem unteren Ende 54 in die Öffnung der Stütze 52 gesteckt und mit ihrem mittleren Schaftteil 55 in die Öffnung des Hakens 51 geschoben werden kann, um einen leicht anbringbaren und entfernbaren Behältergriff zu bilden.

Die Teile 45 bis 50 bilden eine Rollvorrichtung für das Faß 1, so daß der Behälter leicht gekippt mit der Führungsstange 53 als Griff verfahren werden kann.

Um den Behälter entsprechend einem Müllbehälter anheben und auskippen zu können, können am Befestigungsring 10 zwei ösenartige Ansätze 35, 36 angeschweißt sein.

Ferner ist es mit einer Kranwinde möglich, den gesamten Behälter an einer Transportöse 25 (Fig. 2) anzuheben, die am Scheitelpunkt des Deckels 20 angeschweißt ist.

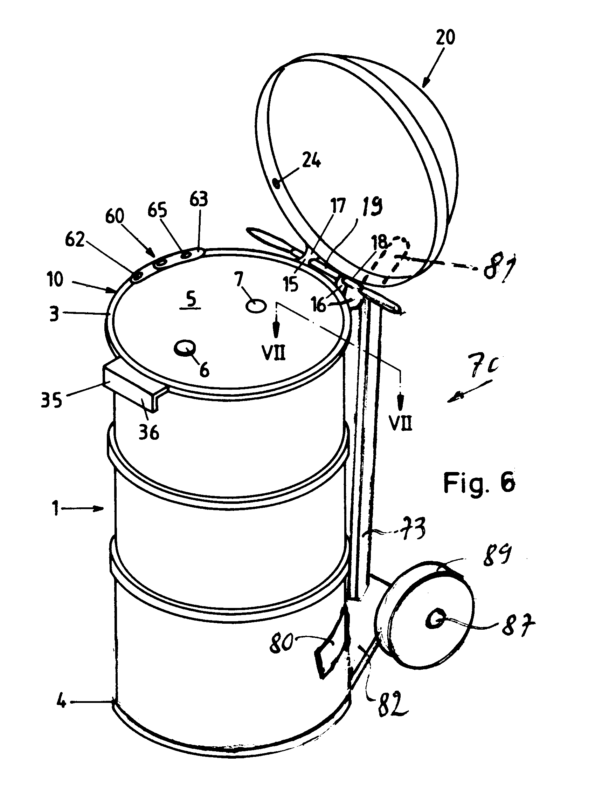

In den Fig. 6 bis 10 ist eine weitere Ausführungsform des Entsorgungsbehälters und von Einzelteilen dargestellt. Gleiche Bezugszeichen deuten auf funktionsgleiche Teile mit dem ersten Ausführungsbeispiel hin. Nachfolgend brauchen deshalb nur die Unterschiede erläutert zu werden.

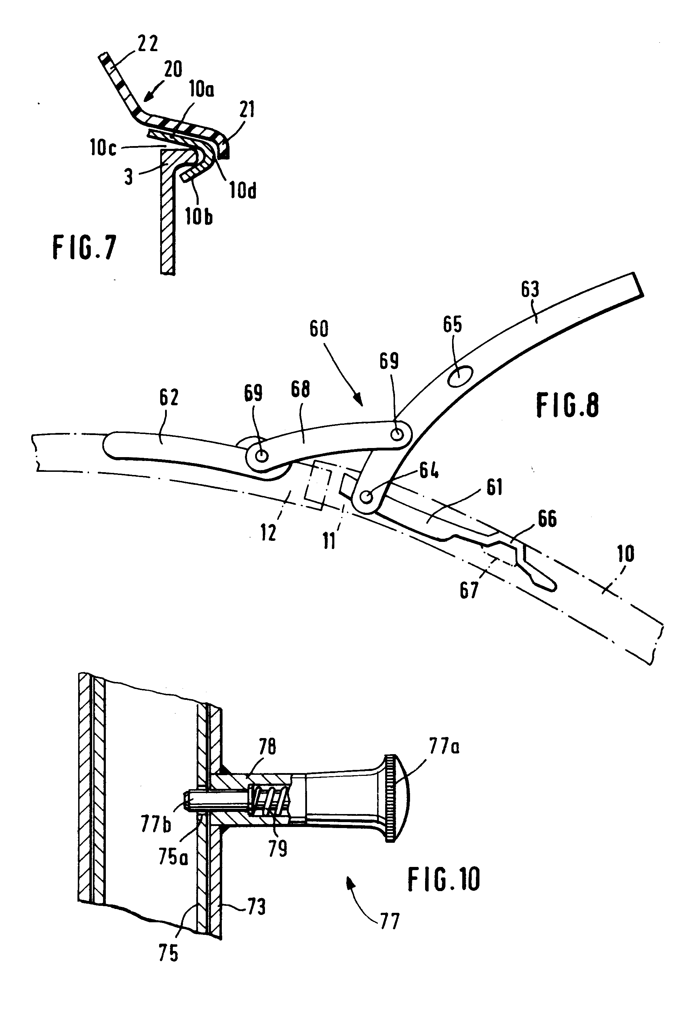

Der obere erste Befestigungsring 10 ist als offene Spange ausgebildet, deren Schlitz durch ein Spannschloß 60 überbrückt wird. Wie in Fig. 8 mit strichpunktierten Linien dargestellt, überlappen sich dabei die Enden 11, 12 des Befestigungsringes 10, der einen V-förmigen Querschnitt mit unterschiedlich langen Schenkeln 10a, 10b (Fig. 7) und einer umlaufenden Nut 10c aufweist, wobei die Basis 10d des V abgeplattet ist. Der Klappdeckel 20 kann deshalb mit seinem ringförmigen Aufsetzrand 21 gut über den ersten Befestigungsring 10 greifen, wenn der Deckel 20 geschlossen wird, wie in Fig. 7 anhand eines aufgebrochenen Randstücks dargestellt.

Das Spannschloß 60 (Fig. 8) weist eine Lasche 61 zur Befestigung am Ende 11 der Spange 10 und eine Lasche 62 zur Befestigung am Ende 12 der Spange 10 auf. Ein Griffhebel 63 mit V-förmigem Querschnitt entsprechend dem Querschnitt der Spange 10 kann sich um die Außenoberfläche der Spange 10 legen, wie in Fig. 6 dargestellt, und aufgestellt werden, wie in Fig. 8 dargestellt. Zu diesem Zweck durchgreift eine Achse 64 das Ende 11 der Spange, und eine entsprechende Bohrung in der Lasche 61, die sich im übrigen an der Innenoberfläche der Spange 10 anschmiegt und dort beispielsweise durch Punktschweißen befestigt ist. Der Griffhebel 63 weist eine Öffnung 65 und die Lasche 61 eine Ausbiegung 66 auf, die gleichen Abstand von der Schwenkachse 64 haben und mit einer Öffnung 67 in der Spange 10 zusammentreffen, so daß eine Durchstecköffnung für den Bügel eines Vorhängeschlosses gebildet wird. Die Öffnungen 65, 67 fallen mit der Öffnung 24 in dem Deckel 20 zusammen, wenn dieser geschlossen wird. Der Griffhebel 63 und die Lasche 62 sind über zwei parallel zueinander angeordnete Verbindungshebel 68 sowie Achsen 69 miteinander verbunden. Wenn man den Griffhebel 69 umlegt, wird über den Verbindungshebel 68 ein Zug auf das Ende 12 des Befestigungsringes 10 ausgeübt, so daß sich die beiden Enden 11 und 12 weiter ineinander schieben und der Spangenumfang verkleinert wird, wodurch sich auch der Innendurchmesser der vom Befestigungsring umgebenen Öffnung verkleinert.

Der Befestigungsring 10 ist so bemessen, daß sein Schenkel 10b in der Öffnungsstellung des Spannschlosses 60 über den Randfalz 3 des Fasses hinweggeschoben werden kann, während bei geschlossenem Spannschloß 60 die kreisförmige Öffnung so weit verengt wird, daß der Schenkel 10b hinter den Randfalz 3 greift, wie in Fig. 7 dargestellt. Der Schenkel 10a ist auf jeden Fall so lang, daß auch bei geöffnetem Spannschloß 60 eine Auflage auf dem Randfalz 3 stattfindet, so daß man den geöffneten Befestigungsring 10 durch einfaches Aufstecken auf den Randfalz 3 und Umlegen des Hebels 63 bequem montieren kann.

Die Scharnierteile 15 bis 19 können ähnlich wie im ersten Ausführungsbeispiel ausgebildet sein. Die durchgesteckte Achse 19 ist jedoch besonders lang ausgebildet. Auf den hervorstehenden Enden sind Griffe mit Preßsitz aufgeschoben, welche gleichzeitig als Sicherung der Achse 19 dienen.

Die Ansätze 35, 36 zum Untergreifen durch eine Kippeinrichtung, wie sie beispielsweise bei Müllfahrzeugen vorgesehen ist, sind im dargestellten Ausführungsbeispiel als Winkelschiene ausgebildet, welche diametral gegenüber den Scharnierteilen 15 bis 19 an dem Befestigungsring 10 angeschweißt ist.

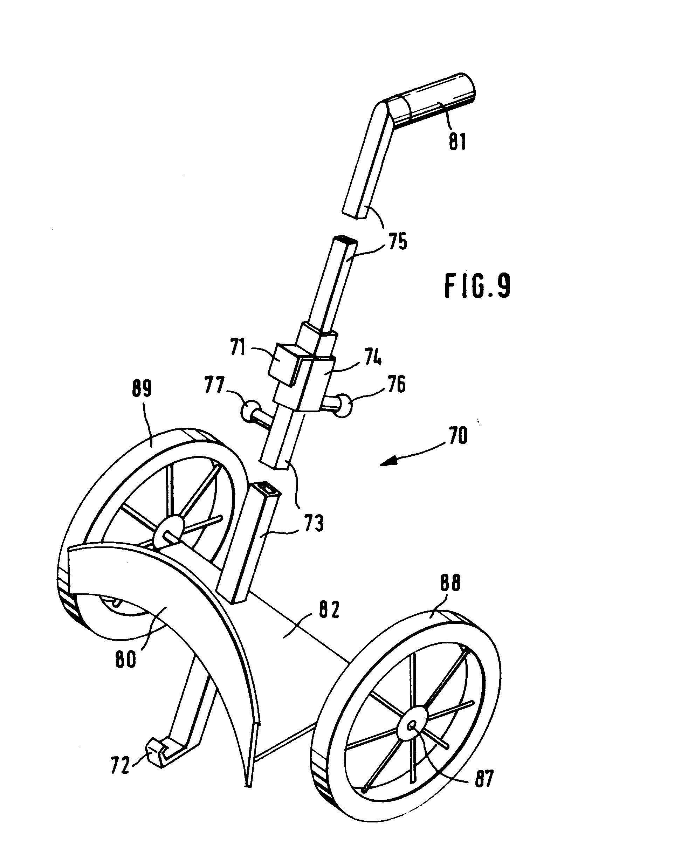

Fig. 9 zeigt eine Ausführungsform 70 der Transportvorrichtung, die karrenmäßig ausgebildet ist. Zum lösbaren Befestigen des Fasses 1 sind Haken 71 und 72 vorgesehen, die hinter die Griffstange 19 bzw. den unteren Rand 4 des Fasses eingreifen und zu diesem Zweck gegeneinander verstellt werden können. Die Griffstange weist drei Abschnitte 73, 74, 75 auf, wobei die Abschnitte 74 und 75 auf bzw. in dem Abschnitt 73 teleskopierend verschiebbar und in vorgegebenen Raststellungen verriegelbar sind. Zu diesem Zweck sind Rastbolzen 76 und 77 vorgesehen, die jeweils mit Lochreihen in den Stangenabschnitten 73 und 75 zusammenarbeiten.

Fig. 10 stellt einen teilweisen Schnitt durch den Rastbolzen 77 dar, dessen äußeres Ende als Griff 77a und dessen inneres Ende als Riegel 77b ausgebildet sind. Der Rastbolzen 77 ist in einer Hülse 78 geführt und wird durch eine Feder 79 in die dargestellte Eingriffslage gezogen. Wie erwähnt, ist in dem Stangenabschnitt 75 eine Lochreihe vorgesehen, von der die Bohrung 75a in Fig. 10 zu sehen ist. Nach Herausziehen des Rastbolzens 77 kann somit der Abschnitt 75 in dem Abschnitt 73 verschoben werden und nach Eingriff in eine entsprechende Bohrung 75b in einer anderen Stellung verriegelt werden, um eine passende Höhe des Griffes 81 (Fig. 6 und 9) einzustellen. Wenn der Stangenabschnitt 75 ganz in den Stangenabschnitt 73 hineingefahren ist, wie in Fig. 6 dargestellt, dient der Griff 81 als Auflager für den geöffneten Klappdeckel 20.

Der Rastbolzen 76 entspricht in seinem Aufbau dem beschriebenen Rastbolzen 77, jedoch ist die Hülse 78 an dem muffenartigen Stangenabschnitt 74 angeschweißt, und die Feder 79 kann den Rastbolzen nicht ganz in die entsprechende Bohrung der Lochreihe im Stangenabschnitt 73 hineinziehen, weil innerhalb dieses Stangenabschnittes 73 sich noch der Stangenabschnitt 75 befindet. Der teilweise Eingriff des vorderen Endes 77b des Rastbolzens genügt aber zur Verriegelung des muffenartigen Stangenabschnittes 74. Das Faß 1 wird mit dem unteren Bodenrand 4 auf den Haken 72 geladen, und der muffenartige Stangenabschnitt 74 wird herabgelassen, bis der Haken 71 hinter die Stange 19 greift, wonach der Riegelbolzen 76 die eingenommene Stellung sichert.

Die karrenartige Transportvorrichtung 70 weist statt eines kompletten Befestigungsringes nur noch einen Ringabschnitt 80 auf, der sich um einen gewissen Teil des Umfanges des Fasses 1 legt. Der Ringabschnitt 80 ist über eine Platte 82 mit dem Stangenabschnitt 73 fest verbunden, beispielsweise durch Schweißverbindung. An der Platte 82 ist eine Achse 87 für die Räder 88 und 89 angebracht.

Die Ausführungsform nach den Fig. 6 bis 10 hat den Vorzug, daß die Fässer 1 rasch und bequem gewechselt werden können. In dieser Hinsicht sollte der Deckel 20 nicht allzu schwer sein, weswegen seine Herstellung aus Kunststoff bevorzugt wird, beispielsweise auf glasfaserverstärktem Kunststoff oder aus gespritztem Polyethylen oder Polystyrol.

Handelsübliche Fässer gibt es in unterschiedlichen Größen, und demgemäß können die Faßkrone und die Rollvorrichtung für die jeweils passende Größe ausgebildet sein und eingestellt werden. Je nach der Art und der Vielfältigkeit des anfallenden Sondermülls stellt man eine entsprechende Anzahl von Entsorgungsbehältern auf und kennzeichnet diese. Da der ringförmige Aufsetzrand des Klappdeckels gut über den Faßrand greift, wird Regen und Spritzwasser weitgehend von der oberen Endwand des Fasses abgehalten und kann so nicht ins Faßinnere dringen. Die Entsorgungsbehälter können deshalb auch im Freien aufgestellt werden. Um die Behälter gegen unbefugte Benutzung zu sichern, können die Verschlußeinrichtungen ein Durchsteckschloß oder dergleichen umfassen.

## Patentansprüche

1. Entsorgungsbehälter zur Aufnahme von Abfällen, mit folgenden Merkmalen:
   ein zylindrisches Gefäß;
   ein Befestigungsring (10), der am oberen Ende des Gefäßes lösbar befestigt ist;
   ein Klappdeckel (20), der über Scharnierteile (15 bis 19) mit dem Befestigungsring (10) beweglich verbunden ist;
   Transporteinrichtungen zur erleichterten Handhabung des Entsorgungsbehälters;
   gekennzeichnet durch folgende Merkmale:
   das zylindrische Gefäß ist ein Faß (1) bekannter Ausbildung;
   der Klappdeckel (20) ist passend zum Aufsetzen auf den Befestigungsring (10) ausgebildet.

2. Behälter nach Anspruch 1,
   dadurch gekennzeichnet, daß die Transporteinrichtungen eine Umfassungsvorrichtung (40; 72, 80) zum lösbaren Halten des unteren Endes (4) des Fasses (1) und eine Rollvorrichtung (45-50; 87, 88, 89) aufweisen, die an dieser Umfassungsvorrichtung (40; 72, 80) gehaltert ist.

3. Behälter nach Anspruch 1 oder 2,
   dadurch gekennzeichnet, daß der Klappdeckel (20) aus einem ringförmigen Aufsetzrand (21) und einer gewölbten Deckwand (22) besteht, wobei ein abgeschlossener Hohlraum zwischen Faß (1) und Klappdeckel (20) freigelassen ist, wenn der Klappdeckel (20) mit seinem Aufsetzrand (21) auf dem Befestigungsring (10) aufsitzt und daß Verschlußeinrichtungen (14, 24; 65, 66, 67) zur verschließbaren Verbindung des Klappdeckels (20) mit dem Befestigungsring (10) vorgesehen sind.

4. Behälter nach Anspruch 3,
   dadurch gekennzeichnet, daß ein Einfülltrichter (30) in dem abgeschlossenen Hohlraum untergebracht ist, der aus einer Einfüllschale (31) und einem exzentrisch angebrachten Einfüllstutzen (32) besteht.

5. Behälter nach einem der Ansprüche 1 bis 4,
   dadurch gekennzeichnet, daß die Transporteinrichtungen am Befestigungsring (10) befestigte Ansätze (35, 36) zum Untergreifen durch eine Kippeinrichtung umfassen.

6. Behälter nach einem der Ansprüche 1 bis 5,
   dadurch gekennzeichnet, daß die Transporteinrichtungen einen Karren (70) umfassen, der eine Griffstange aufweist, die teleskopierende, in unterschiedlichen Stellungen verriegelbare Stangenabschnitte (73, 74, 75) enthält, von denen zwei Stangenabschnitte (73, 74) mit Greifhaken (71, 72) versehen sind.

7. Behälter nach einem der Ansprüche 1 bis 6,
   dadurch gekennzeichnet, daß der Befestigungsring (10) als Spange mit einem V-förmigen Querschnitt ausgebildet ist, daß die Schenkel (10a, 10b) des V unterschiedlich lang sind und die Basis (10d) abgeplattet ist, wobei in der gespreizten Stellung der Spange der untere, kürzere Schenkel (10b) eine kreisförmige Öffnung freigibt, die größer ist als der Querschnitt des Fasses (1) im Bereich des am oberen Faßende angebrachten Randfalzes (3), während der obere, längere Schenkel (10a) sich auf diesen Randfalz (3) aufstützt und daß der Befestigungsring (10) zu seiner lösbaren Befestigung ein Spannschloß (60) aufweist, das gemäß dem V-förmigen Querschnitt dieses Befestigungsrings konstruiert ist, um sich an diesen anzulegen.

8. Behälter nach einem der Ansprüche 3 bis 7,
   dadurch gekennzeichnet, daß der Aufsetzrand (21) des Klappdeckels (20) den ersten Befestigungsring (10) unter Einschluß des Spannschlosses (60) umgreift und daß im Aufsetzrand (21), im Spannschloß (60) und im Befestigungsring (10) zueinander fluchtende Öffnungen (24, 65, 67) vorgesehen sind, durch welche der Bügel eines Vorhängeschlosses hindurchgreifen kann.

9. Verwendung einer Anzahl von Entsorgungsbehältern zur Zwischenlagerung von Abfällen, insbesondere Dosen, Büchsen, Verpackungen und dergleichen aus Metall, Kunststoff, Glas u.s.w., oder von Altölen und Chemikalien unterschiedlicher Spezifikation, wobei jeder Materialart ein entsprechend gekennzeichneter, gesonderter Entsorgungsbehälter nach einem der Ansprüche 1 bis 8 zugeordnet ist.

## Claims

1. A refuse disposal container for receiving waste, having the following features:
   a cylindrical container;
   a fixing ring (10) releasably secured to the top end of the container;
   a pivotable cover (20) movably connected to the fixing ring (10) via hinge members (15 to 19);

transport means for facilitated handling of the refuse disposal container;

characterised by the following features:

the cylindrical container is a barrel or drum (1) of known construction;

the pivotable cover (20) is constructed suitably for fitting on to the fixing ring (10).

2. A container according to claim 1, characterised in that the transport means comprise a mounting device (40; 72, 80) for releasably holding the bottom end (4) of the drum (1) and a rolling device (45 - 50; 87, 88, 89) mounted on said mounting means (40; 72, 80).

3. A container according to claim 1 or 2, characterised in that the pivotable cover (20) consists of an annular rim (21) and a domed cover wall (22), a closed hollow space being left free between the drum (1) and the pivotable cover (20) when the latter is supported by its rim (21) on the fixing ring (10) and in that closure means (14, 24; 65, 66, 67) are provided for closably connecting said cover (20) to the fixing ring (10).

4. A container according to claim 3, characterised in that a filling funnel (30) is disposed in the closed hollow space and consists of a filling bowl (31) and an eccentrically disposed filling connection (32).

5. A container according to any one of claims 1 to 4, characterised in that the transport means comprise lugs (35, 36) fixed to the fixing ring (10) for tilting means to engage therebeneath.

6. A container according to any one of claims 1 to 5, characterised in that the transport means comprise a carriage (70) having a handle comprising telescopic rod portions (73, 74, 75) lockable in different positions, two of the portions (73, 74) being provided with gripper hooks (71, 72).

7. A container according to any one of claims 1 to 6, characterised in that the fixing ring (10) is constructed as a clamp band with a V-shaped cross-section, in that the limbs (10a, 10b) of the V are of different lengths and the base (10d) is flattened, the bottom shorter limb (10b) in the spread position of the clamp band freeing a circular aperture larger than the cross-section of the drum (1) in the region of the rim (3) at the top end thereof, while the other longer limb (10a) rests on said rim (3) and in that the fixing ring (10) has for its releasable fixing a lever lock device (60) which is constructed to conform to the V-shaped cross-section of this fixing ring in order to abut the same.

8. A container according to any one of claims 3 to 7, characterised in that the rim (21) of the pivotable cover (20) engages around the first fixing ring (10) to enclose the lever lock device (60) and in that openings (24, 65, 67) in alignment with one another are provided in the rim (21), in the lever lock device (60) and in the fixing ring (10), through which openings the shackle of a padlock can engage.

9. Use of a number of refuse disposal containers for the intermediate storage of waste, more particularly cans, tins, packaging and the like made of metal, plastics, glass etc., or waste oil and chemicals of different specifications, each type of material having associated an appropriately marked separate refuse disposal container according to any one of claims 1 to 8.

**Revendications**

1. Récipient à ordures destiné à recevoir des déchets, ayant les caractéristiques suivantes :

un corps de récipient cylindrique ;

un anneau de fixation (10), qui, amovible, est fixé à l'extrémité supérieure du récipient ;

un couvercle rabattant (20), qui est relié mobile à l'anneau de fixation (10) par l'intermédiaire des éléments faisant charnière (15 à 19) ;

un système de transport pour faciliter le maniement du récipient à ordures ;

caractérisé par les propriétés suivantes :

le corps de récipient cylindrique est un récipient (1) de configuration connue ;

le couvercle rabattant (20) a une configuration adaptée pour venir se positionner sur l'anneau de fixation (10).

2. Récipient selon la revendication 1, caractérisé en ce que le système de transport comporte un dispositif d'entourage (40;72,80) pour le maintien amovible de l'extrémité inférieure (4) du récipient (1) et un dispositif de roulage (45-50;87,88,89) qui est monté sur ce dispositif d'entourage (40;72,80).

3. Récipient selon la revendication 1 ou 2, caractérisé en ce que le couvercle rabattant (20) se compose d'un rebord circulaire (21) et d'une paroi supérieure bombée (22), un espace creux fermé étant ainsi laissé libre, entre le récipient (1) et le couvercle rabattant (20) lorsque le couvercle rabattant (20) prend appui par son rebord (21) sur l'anneau de fixation (10) et en ce qu'un système de fermeture (14,24;65,66,67) est prévu pour pouvoir joindre et fermer le couvercle rabattant (20) et l'anneau de fixation (10).

4. Récipient selon la revendication 3, caractérisé en ce que, dans l'espace creux fermé est placé un entonnoir de remplissage (30), qui se compose d'une cuvette de remplissage (31) et d'une tubulure de remplissage excentrée (32).

5. Récipient selon l'une des revendications 1 à 4, caractérisé en ce que le système de transport comporte des appendices (35,36) fixés sur l'anneau de fixation (10) et permettant la mise en prise par dessous ceux-ci d'un dispositif à bascule.

6. Récipient selon l'une des revendications 1 à 5, caractérisé en ce que le système de transport comporte un chariot (70) pourvu d'un manche, lequel comprend des segments (73,74,75) télescopiques verrouillables en différentes positions, deux de ces segments (73,74) étant pourvus de talons de prise (71,72).

7. Récipient selon l'une des revendications 1 à 6, caractérisé en ce que l'anneau de fixation (10) est configuré comme une boucle comportant une section transversale en forme de V, en ce que les branches (10a, 10b) du V sont de longueurs différentes et la base (10d) aplatie, auquel cas, en position écartée de la boucle, la branche inférieure la plus courte (10b) libère une ouverture circulaire, qui est plus grande que la section transversale du récipient (1) dans la zone du rebord (3) placé à l'extrémité supérieure du récipient, la branche supérieure la plus longue (10a) s'appuyant sur ce rebord (3) et
en ce que l'anneau de fixation (10) comporte pour sa fixation amovible un tendeur (60), qui est configuré en rapport avec la section transversale en V de cet anneau de fixation, afin de s'appliquer contre celui-ci.

8. Récipient selon l'une des revendications 3 à 7, caractérisé en ce que, sous l'action du tendeur (60), le rebord (21) du couvercle rabattant (20) enveloppe le premier anneau de fixation (10) et en ce que des ouvertures alignées (24,65,67) entre elles sont prévues dans le rebord (21), dans le tendeur (60) et dans l'anneau de fixation (10), à travers lesquelles peut venir en prise l'étrier d'un cadenas.

9. Utilisation d'une série de récipients à ordures pour le stockage intermédiaire de déchets, notamment de boîtes, de boîtes de conserves, d'emballages et analogues en métal, matière plastique, verre etc... ou d'huiles usées et de produits chimiques de spécification différente, un récipient à part, caractérisé en conséquence, conforme à l'une des revendications 1 à 8 étant associé à chaque type de matériau.

EP 0 318 633 B1

Fig. 1

Fig. 4

Fig. 3

Fig. 2

Fig. 5

EP 0 318 633 B1

Fig. 6

**FIG.7**

**FIG.8**

**FIG.10**

FIG.9